# EUROPÄISCHE PATENTSCHRIFT

(11) **EP 2 017 054 B1**
(45) Veröffentlichungstag und Bekanntmachung des Hinweises auf die Patenterteilung: **22.09.2010**
(21) Anmeldenummer: 08011317.8
(22) Anmeldetag: 21.06.2008
(51) Int. Cl.: B29C 41/04, B29C 41/22, B28C 5/42, E04G 21/04, F16L 11/04, F16L 57/06

(54) **Transportbetonwerk mit Polyurethan-Betonschlauch**
Transportable concrete plant with polyurethane concrete hose
Usine de béton de transport dotée d'un tuyau à béton en polyuréthane

(30) Priorität: 20.07.2007 DE 102007034067
(43) Veröffentlichungstag der Anmeldung: 21.01.2009
(73) Patentinhaber: Arthur Habermann GmbH & Co. KG, 58453 Witten/Ruhr (DE)
(72) Erfinder: Tietzer, Michael, 44879 Bochum (DE)
(74) Vertreter: Behrendt, Arne

(56) Entgegenhaltungen:
- DE-A1- 10 324 321
- US-B1- 6 227 249

## Beschreibung

Die vorliegende Erfindung betrifft ein Transportbetonwerk mit einer Einfüllvorrichtung zum Einfüllen von Transportbeton in einen Fahrmischer, wobei die Einfüllvorrichtung einen im Wesentlichen vertikal herabhängenden, nach unten geöffneten Betonschlauch aus Polyurethan umfasst, welcher während des Einfüllens in einen Einfülltrichter des Fahrmischers hineintaucht und von Transportbeton durchflossen ist.

Ferner betrifft die Erfindung den Betonschlauch selbst sowie ein Verfahren zur Herstellung desselben.

In einem Transportbetonwerk wird aus Sand, Kies, Zement, Wasser und etwaigen Zuschlagsstoffen Beton gemischt, welcher mit Hilfe von LKW-Fahrmischern zur Baustelle transportiert wird. Zum Einfüllen des Transportbetons in den Fahrmischer sind Transportbetonwerke mit einer Einfüllvorrichtung versehen, die im Wesentlichen einen Trichter und einen an dessen Auslauf befestigten Betonschlauch umfassen. Der Trichter ist auf einer unterfahrbaren Tribüne angeordnet, von welcher der nach unten geöffnete Betonschlauch im Wesentlichen vertikal herab hängt.

Fahrmischer, welche den Beton vom Transportbetonwerk zur Baustelle transportieren, sind in der Regel mit einem nach oben geöffneten Einfülltrichter versehen, durch welchen der Transportbeton in die Mischtrommel des Fahrmischers eingefüllt wird. Zum Aufnehmen seiner Betonladung fährt der Fahrmischer meist rückwärts unter die Tribüne und rangiert seinen Einfülltrichter unter den Betonschlauch, so dass dieser in den Einfülltrichter des Fahrmischers hineintaucht. Der Transportbeton verlässt sodann das Transportbetonwerk durch den Betonschlauch und fließt weiter durch den Einfülltrichter des Fahrmischers in dessen Mischtrommel. Nach Abschluss des Füllvorgangs fährt der Fahrmischer unter der Tribüne hervor, so dass der Betonschlauch für den nächsten Füllvorgang frei ist.

Der Betonschlauch eines Transportbetonwerks ist einem hohen Verschleiß ausgesetzt, der zunächst durch den ständigen Durchfluss von abrasiven Beton bedingt ist. Der Betonschlauch muss daher regelmäßig ausgetauscht werden, was mit einem vergleichsweise hohen Aufwand einhergeht. Aufgrund der exponierten Lage des herabhängenden Schlauches ist eine Arbeitsbühne erforderlich, um angesichts des hohen Gewichtes derartiger Betonschläuche eine gefahrlose Montage zu ermöglichen.

Betonschläuche werden entweder aus Gummi oder aus Polyurethan gefertigt. Polyurethan (PU) weist dabei eine höhere Beständigkeit gegen Schalöl, UV-Strahlung und Witterungseinflüsse auf. Einen aus Polyurethan hergestellten Schlauch zum Fördern von Beton auf der Baustelle zeigt die US 5 351 716 B1. PU-Betonschläuche wurden in der Vergangenheit im Wesentlichen durch Wickelverfahren hergestellt, etwa so, wie die Gebrauchsmusterschrift DE 20 2006 019 063 U1 das Wickeln eines PU-Panzerschlauches beschreibt. Gummi-Schläuche werden ebenfalls gewickelt, ein Beispiel für einen gewickelten Gummi-Betonschlauch gibt die JP 09-296607. Die US 6 227 249 B1 zeigt einen gewickelten Schlauch aus zwei unterschiedlichen Kunststoff-Schichten, die sich hinsichtlich ihres Werkstoffes voneinander unterscheiden. Bei der Außenschicht handelt es sich um steifes, stabilisierendes PVC, währenddessen innen verschleißfestes PU vorgesehen ist. Ein Transportrohr für Beton ist aus der DE 10 324 321 bekannt.

Ein prinzipbedingter Nachteil gewickelter Betonschläuche resultiert aus ihrer spiralförmigen Schweißnaht, welche die Struktur des Betonschlauches schwächt. Der herabhängende Schlauch wird nämlich immer dann besonders stark mechanisch belastet, wenn der Einfülltrichter unter dem Schlauch positioniert wird. Der Schlauch muss dabei über den Trichterrand hinweg rutschen, wobei er erheblichen Quetschkräften ausgesetzt ist. Die Naht von gewickelten Polyurethan-Betonschläuchen droht ab einem gewissen Abnutzungsgrad zu reißen.

Ein weiterer Nachteil gewickelter Polyurethan-Betonschläuche besteht in deren fertigungsbedingter Materialstärke. Gewickelte Polyurethan-Betonschläuche weisen eine hohe Wandstärke auf, die zunächst das Gewicht des Schlauches erhöhen, was die Überkopf-Montage des Schlauches erschwert. Durch den höheren Materialverbrauch wird der gewickelte Schlauch auch teurer. Ein besonderer Nachteil der hohen Materialstärke ist außerdem die hohe Steifigkeit des Schlauches, die sich sehr nachteilig beim Einfädeln des Trichters unter den Schlauch darstellt. Beim Rangieren weicht ein zu steifer Betonschlauch dem Einfülltrichter des Fahrmischers aus, was im hektischen Umfüllbetrieb häufig unbemerkt bleibt und zu einem Verschütten des Transportbetons führt.

Durch die ihnen eigentümliche Einfädel-Belastung unterscheiden sich Betonschläuche von anderen Förderleitungen für Transportbeton. Deshalb eignet sich das in der deutschen Patentanmeldung DE 29 26 066 A1 vorgestellte Konzept zur Herstellung von Verschleißbelägen für die Einfüllvorrichtung eines Transportbetonwerkes aus verschweißten Polyurethan-Folien keinesfalls zur Herstellung von Betonschläuchen. Betonschläuche werden in dieser Druckschrift erst gar nicht thematisiert.

Inzwischen sind auch nahtlos gegossene Polyurethan-Betonschläuche bekannt geworden. Bei deren Herstellung wird eine im Wesentlichen zylindrische, rohrförmige Form mit ihrer Längsachse vertikal ausgerichtet und mittig mit einem zylindrischen, konzentrischen Kern versehen. Zwischen Kern und rohrförmiger Form bildet sich ein Ringspalt aus, der mit flüssigem Polyurethan gefüllt wird. Nach dem Aushärten des Kunststoffs wird der fertige Schlauch entformt.

Ein auf diese Weise gegossener Betonschlauch ist ideal homogen, nahtlos und mit etwa 8 mm Wandstärke vergleichsweise dünnwanding, so dass er ein geringes Gewicht und die notwendige Verwindungsweichheit aufweist, um das Positionieren des Einfülltrichters unter dem Schlauch zu ermöglichen. Nachteil dieses Gießverfahrens ist jedoch seine geringere Rentabilität gegenüber den Wickelverfahren, da der Gießvorgang in derartigen Formen vergleichsweise langwierig ist. Nachteilig ist auch der Kern in der Form: Dieser muss nämlich eine hohe Oberflächengüte erreichen, damit der Betonschlauch innen glatt wird und einen geringen Strömungswiderstand erreicht. Aufgrund seiner hohen Oberflächengüte ist der Kern sehr teuer, was sich ebenfalls negativ auf die Rentabilität dieses Gießverfahrens auswirkt.

Im Hinblick auf diesen Stand der Technik liegt der vorliegenden Erfindung die Aufgabe zugrunde, den Betonschlauch eines Transportbetonwerkes so weiter zu bilden, dass er nahtlos und leichter zu handhaben ist, ein besseres Einfädelvermögen erreicht und kostengünstig zu fertigen ist.

Gelöst wird diese Aufgabe dadurch, dass der Betonschlauch im Schleudergussverfahren hergestellt wird.

Beim Schleudergussverfahren wird die benötigte Menge des noch flüssigen, unausgehärteten Polyurethans in eine rohrförmige Form eingegossen, die um ihre im Wesentlichen horizontale Längsachse rotiert. Das flüssige Polyurethan legt sich aufgrund der Zentrifugalkräfte an der Innenwandung der rohrförmigen Form an und bildet eine Schicht flüssigen Polyurethans aus. Während des Rotierens härtet das Polyurethan aus, so dass beim Anhalten der rotierenden Form sich an deren Innenwandung ein dünnwandiger Schlauch ausgebildet hat. Dieser wird dann entformt. Das Schleudergussverfahren ist gegenüber dem vorgeschriebenen Gießverfahren deutlich rationeller, da es ohne einen Kern auskommt. Die Formenstandzeit, d.h. die Verweildauer des Polyurethans in der Form, kann im Vergleich zu dem herkömmlichen Gießverfahren auf 1/7 reduziert werden. Auch ist die Oberflächenqualität der Innenwandung der schleudergegossenen Betonschläuche sehr gut, da das flüssige PU dort mit keinem Kern in Kontakt kommt.

Durch das Schleudergussverfahren erhält man einen äußerst dünnwandingen, nahtlosen Polyurethan-Betonschlauch, der den besonderen Belastungen dieses Anwendungszweckes in hervorragender Weise gerecht wird. Durch seine Homogenität und Nahtlosigkeit besteht keine Gefahr eines Nahtbruches wie bei gewickelten Schläuchen. Zudem hat er aufgrund seiner geringen Wandstärke - Versuche zeigen, dass der Schleuderguss eine Materialreduktion auf bis zu 4 mm Wandstärke möglich macht - eine kleine Masse, die den Austausch des Schlauches an der Einfüllvorrichtung erleichtert und die Werkstoffkosten senkt. Die geringere Wandstärke erhöht auch die Flexibilität des Schlauches, was sein Einfädelvermögen signifikant verbessert.

Der erfindungsgemäße Schleuderguss ermöglicht darüber hinaus auch die Herstellung von Betonschläuche, die aus Schichten von unterschiedlichen Werkstoffen aufgebaut sind. Hierzu wird zunächst eine erste Charge flüssigen Polyurethans in die rotierende Form gegossen und zumindest solange ausgehärtet, bis die erste Charge PU teigig ist. Sodann wird eine zweite Charge PU eingefüllt, die sich hinsichtlich ihres Werkstoffes von der ersten unterscheidet. Unter unterschiedlichen Werkstoffen sind in diesem Zusammenhang ungleiche Polyurethan-Sorten zu verstehen, die sich in mindestens einer mechanischen und/oder farblichen Eigenschaft voneinander unterscheiden.

Die beiden Werkstoffe unterscheiden sich vorzugsweise hinsichtlich ihrer Farbe voneinander. Beispielsweise könnte die erste Charge weiß und die zweite grün eingefärbt sein; dieses Farbbeispiel will aber nicht beschränkend verstanden werden, da nahezu jeder Farbton möglich ist. Nach Aushärten der zweiten Charge wird die Form angehalten und der Schlauch entformt. Dessen Wandung wird dann von zwei aufeinander liegenden, farbverschiedenen Schichten gebildet, nämlich außen weiß und innen grün. Der außen weiße Schlauch ist für den Fahrer des Fahrmischers unter der dunklen Tribüne gut zu erkennen, sodass er zielgerichtet rangieren kann. Solange der Schlauch von innen grün ist, hat er seine Verschleißgrenze noch nicht erreicht. Sobald die zweite PU-Schicht verschlissen ist, erscheint der Betonschlauch auch von innen weiß. Dies ist ein einfacher, aber zugleich effektiver Indikator für den Ablauf der Standzeit des Betonschlauches.

Alternativ können sich die Werkstoffe hinsichtlich ihrer Härte unterscheiden. So könnte die Außenschicht des zweischichtigen Schlauches (also die erste Charge) härter sein als die Innenschicht (zweite Charge). Ein solcher Schlauch besäße außen eine harte Tragschicht als stabilisierende Schale, wäre aber innen weich und deswegen verschleißfest. Ein weiterer Vorteil dieser Anordnung der Materialkomponenten ist, dass hierdurch die Wandstärke des Schlauches insgesamt gesenkt werden kann, da die härtere Tragschicht eine größere spezifische Festigkeit erreicht.

Umgekehrt ist es möglich, für die Innenschicht einen härteren Werkstoff zu wählen, um die Reibung an der Innenwand des Schlauches zu reduzieren. Die außenseitig angeordnete weiche Materialkomponente wäre dann widerstandsfähig gegen den Einfülltrichter des rangierenden Fahrmischers.

Ein besonderer Vorteil des Schleudergießverfahrens besteht auch darin, dass die Länge des Schlauches prinzipiell stufenlos einstellbar ist. Dies wird ermöglicht durch einen radial nach innen vorspringenden Ring, der in der gewünschten axialen Position an der Innenwandung der rohrförmigen Form fixiert wird. Der radial vorspringende Ring begrenzt die Länge der Form, die mit flüssigem Polyurethan gefüllt wird. Durch Einstellen der axialen Position des Rings innerhalb der Form kann daher die Länge des Schlauches beliebig eingestellt werden.

Ein Ausführungsbeispiel einer Form zur Durchführung eines Schleudergießverfahrens zur Herstellung eines erfindungsgemäßen Betonschlauches soll nun näher beschrieben werden. Hierfür zeigt:

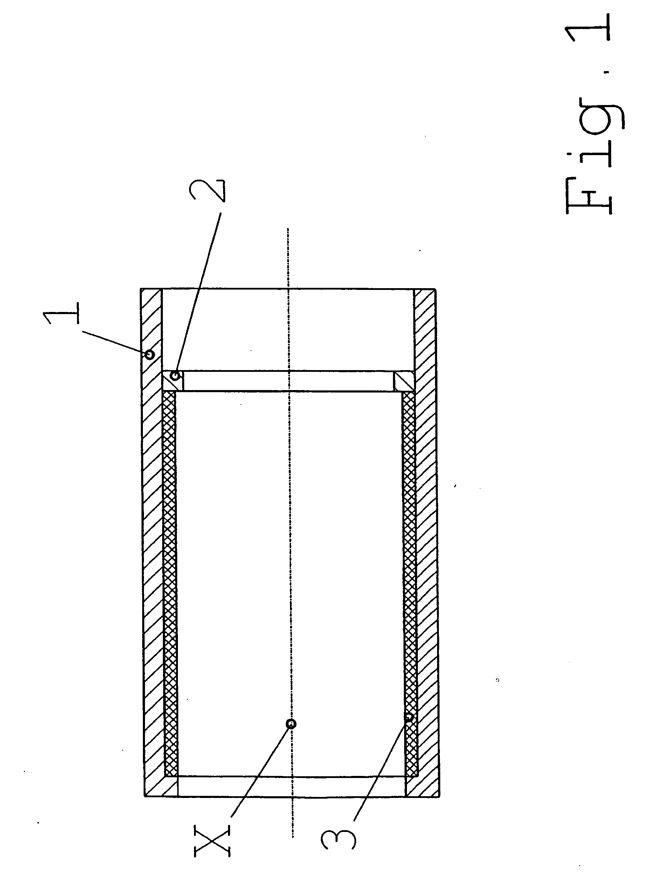

- Fig. 1:: Prinzipskizze Form für Schleuderguss- verfahren.

Eine Form 1 zur Durchführung eines erfindungsgemäßen Schleudergussverfahrens zur Herstellung eines Betonschlauches zeigt Figur 1. Die Form 1 ist im Wesentlichen rohrförmig, Ihre Längsachse X erstreckt sich im Wesentlichen horizontal. An der Innenwandung der Form 1 ist ein nach innen vorspringender Ring 2 fixiert, dessen Axialposition innerhalb des Rohrs 1 entlang der Längsachse X stufenlos einstellbar ist. Der Ring 2 wird in die Form 1 eingeklemmt und die Form 1 rotiert um ihre Längsachse X. Auf der einen Seite des Rings 2 wird die Form 1 nun mit flüssigem Polyurethan 3 befüllt, welches sich bis zum Ring 2 hin ausbreitet. Aufgrund der Zentrifugalkräfte bildet sich entlang der gesamten Wandung der Form 1 jenseits des Rings 2 ein Polyurethan-Film aus, der zum Betonschlauch aushärtet. Nach Abschluss des Aushärtungsvorgangs wird die Form angehalten und der Schlauch entformt. Durch Wahl der Position des Rings 2 entlang der Längsachse X kann somit die Länge des Schlauches stufenlos eingestellt werden. Somit ist es möglich, mit einer einzigen Form 1 Betonschläuche in unterschiedlichen Längen herzustellen.

Alternativ kann nach Aushärten einer ersten Charge PU eine zweite Charge Polyurethan mit anderen Werkstoffeigenschaften in die Form eingefüllt und rotierend ausgehärtet werden. Wenn sich die Chargen hinsichtlich ihrer Farbe unterscheiden, erhält man einen zweifarbigen Schlauch. Wenn die zweite Charge weicher ist als die erste, erhält man einen Schlauch, der innen verschleißfest und außen steif ist. Eine solche Materialkombination schafft besonders dünnwandige und deswegen leichte Betonschläuche. Selbstverständlich können sich die Werkstoffe sowohl hinsichtlich ihrer Farbe als auch hinsichtlich ihrer Härte unterscheiden.

## Patentansprüche

1. Transportbetonwerk, mit einer Einfüllvorrichtung zum Einfüllen von Transportbeton in einen Fahrmischer, wobei die Einfüllvorrichtung einen im Wesentlichen vertikal herabhängenden, nach unten geöffneten Betonschlauch aus Polyurethan umfasst, welcher während des Einfüllens in einen Einfülltrichter des Fahrmischers hineintaucht und von Transportbeton durchflossen ist, **dadurch gekennzeichnet, dass** der Betonschlauch im Schleudergussverfahren gegossen ist.

2. Transportbetonwerk nach Anspruch 1, **dadurch gekennzeichnet, dass** die Wandung des Betonschlauchs aus mindestens zwei unterschiedlichen Polyurethan-Schichten besteht, wobei sich die Polyurethan-Schichten hinsichtlich ihres Werkstoffes voneinander unterscheiden.

3. Transportbetonwerk nach Anspruch 2, **dadurch gekennzeichnet, dass** die Werkstoffe sich hinsichtlich ihrer Farbe unterscheiden.

4. Transportbetonwerk nach Anspruch 2 oder 3, **dadurch gekennzeichnet, dass** die Werkstoffe sich hinsichtlich ihrer Härte unterscheiden.

5. Transportbetonwerk nach Anspruch 4, wobei die Wandung des Betonschlauchs aus genau zwei unterschiedlichen Polyurethan-Schichten besteht, **dadurch gekennzeichnet, dass** der härtere Werkstoff die außen liegende Schicht bildet.

6. Transportbetonwerk nach Anspruch 4, wobei die Wandung des Betonschlauchs aus genau zwei unterschiedlichen Polyurethan-Schichten besteht, **dadurch gekennzeichnet, dass** der härtere Werkstoff die innen liegende Schicht bildet.

7. Betonschlauch aus schleudergegossenem Polyurethan für die Einfüllvorrichtung eines Transportbetonwerks nach einem der Ansprüche 1 bis 6.

8. Verfahren zur Herstellung eines Betonschlauches für die Einfüllvorrichtung eines Transportbetonwerks nach einem der Ansprüche 1 bis 6, bei dem flüssiges Polyurethan (3) in eine im Wesentlichen zylindrische Form (1) gegossen und darin ausgehärtet wird, **gekennzeichnet durch** die folgenden Schritte:
a) Bereitstellen einer rohrförmigen Form (1), deren Längsachse (X) sich im Wesentlichen horizontal erstreckt und Rotieren der Form (1) um ihre Längsachse (X);
b) Einfüllen einer ersten Charge flüssigen Polyurethans (3) in die rotierende, rohrförmige Form (1), sodass sich an der Innenwandung der rohrförmigen Form (1) eine Schicht flüssigen Polyurethans (3) ausbildet;
c) Aushärten der ersten Charge Polyurethan in der rotierenden Form.

9. Verfahren nach Anspruch 8, zur Herstellung eines Betonschlauches für ein Transportbetonwerk nach einem der Ansprüche 2 bis 6, **dadurch gekennzeichnet, dass** nach dem Aushärten der ersten Charge Polyurethan eine zweite Charge flüssigen Polyurethans in die rotierende Form gegossen wird, wobei das Polyurethan der zweiten Charge sich von dem Polyurethan der ersten Charge hinsichtlich seines Werkstoffes unterscheidet.

10. Verfahren nach Anspruch 8 oder 9, **dadurch gekennzeichnet, dass** an der Innenwandung der rohrförmigen Form (1) ein radial nach innen vorspringender Ring (2) fixiert wird, dessen axiale Position innerhalb der Form (1) einstellbar ist.

## Claims

1. A ready-mix concrete apparatus having a filling device for introducing ready-mix concrete into a truck mixer, wherein the filling device has a downwardly open concrete hose of polyurethane which hangs down substantially vertically and which during the filling operation dips into a filling hopper of the truck mixer and has ready-mix concrete flowing therethrough, **characterised in that** the concrete hose is cast in a centrifugal casting process.

2. A ready-mix concrete apparatus according to claim 1 **characterised in that** the wall of the concrete hose comprises at least two different polyurethane layers, the polyurethane layers differing from each other in respect of their material.

3. A ready-mix concrete apparatus according to claim 2 **characterised in that** the materials differ in respect of their colour.

4. A ready-mix concrete apparatus according to claim 2 or claim 3 **characterised in that** the materials differ in respect of their hardness.

5. A ready-mix concrete apparatus according to claim 4 wherein the wall of the concrete hose comprises precisely two different polyurethane layers, **characterised in that** the harder material forms the outward layer.

6. A ready-mix concrete apparatus according to claim 4 wherein the wall of the concrete hose comprises precisely two different polyurethane layers, **characterised in that** the harder material forms the inward layer.

7. A concrete hose of centrifugally cast polyurethane for the filling device of a ready-mix concrete apparatus according to one of claims 1 to 6.

8. A process for the production of a concrete hose for the filling device of a ready-mix concrete apparatus according to one of claims 1 to 6 in which liquid polyurethane (3) is cast into a substantially cylindrical mould (1) and is hardened therein, **characterised by** the following steps:
a) providing a tubular mould (1), whose longitudinal axis (X) extends substantially horizontally and rotating the mould (1) about its longitudinal axis (X);
b) introducing a first batch of liquid polyurethane (3) into the rotating tubular mould (1) so that a layer of liquid polyurethane (3) is formed at the inside wall of the tubular mould (1); and
c) hardening the first batch of polyurethane in the rotating mould.

9. A process according to claim 8 for the production of a concrete hose for a ready-mix concrete apparatus according to one of claims 2 to 6 **characterised in that** after hardening of the first batch of polyurethane a second batch of liquid polyurethane is cast into the rotating mould, the polyurethane of the second batch differing from the polyurethane of the first batch in respect of its material.

10. A process according to claim 8 or claim 9 **characterised in that** fixed to the inside wall of the tubular mould (1) is a radially inwardly projecting ring (2), the axial position of which is adjustable within the mould (1).

## Revendications

1. Usine de béton de transport, avec un dispositif de remplissage pour introduire du béton de transport dans un mélangeur roulant, où le dispositif d'introduction comporte un tuyau à béton en polyuréthanne pendant sensiblement verticalement vers le bas, ouvert vers le bas, qui plonge pendant le remplissage dans une trémie de remplissage du mélangeur roulant et est traversé par du béton de transport,
**caractérisée en ce que** le tuyau à béton est coulé lors d'un procédé de coulage centrifuge.

2. Usine de béton de transport selon la revendication 1, **caractérisé en ce que** la paroi du tuyau à béton est réalisée en au moins deux couches de polyuréthanne différentes, où les couches de polyuréthanne se différencient en ce qui concerne leur matériau.

3. Usine de béton de transport selon la revendication 2, **caractérisée en ce que** les matériaux se différencient en ce qui concerne leur couleur.

4. Usine de béton de transport selon la revendication 2 ou 3, **caractérisée en ce que** les matériaux se différencient en ce qui concerne leur dureté.

5. Usine de béton de transport selon la revendication 4, où la paroi du tuyau à béton est réalisée en exactement deux couches de polyuréthanne différentes, **caractérisée en ce que** le matériau plus dur forme la couche située à l'extérieur.

6. Usine de béton de transport selon la revendication 4, où la paroi du tuyau à béton est réalisée en exactement deux couches de polyuréthanne différentes, **caractérisée en ce que** le matériau plus dur forme la couche située à l'intérieur.

7. Tuyau à béton en polyuréthanne réalisé par coulage centrifuge pour le dispositif de remplissage d'une usine de béton de transport selon l'une des revendications 1 à 6.

8. Procédé de fabrication d'un tuyau à béton pour le dispositif de remplissage d'une usine de béton de transport selon l'une des revendications 1 à 6, dans lequel du polyuréthanne liquide (3) est coulé dans un moule (1) sensiblement cylindrique et y est durci,
**caractérisé par** les étapes suivantes:
a) mise à disposition d'un moule tubulaire (1) dont l'axe longitudinal (X) s'étend sensiblement horizontalement, et rotation du moule (1) autour de son axe longitudinal (X);
b) introduction d'une première charge de polyuréthanne liquide (3) dans le moule tubulaire tournant (1) de sorte qu'il se forme à la paroi intérieure du moule tubulaire (1) une couche de polyuréthanne liquide (3);
c) durcissement de la première charge de polyuréthanne dans le moule tournant.

9. Procédé selon la revendication 8, pour la fabrication d'un tuyau à béton pour une usine de béton de transport selon l'une des revendications 2 à 6, **caractérisé en ce qu'**après le durcissement de la première charge de polyuréthanne, une deuxième charge de polyuréthanne liquide est coulée dans le moule tournant, où le polyuréthanne de la deuxième charge se distingue du polyuréthanne de la première charge en ce qui concerne son matériau.

10. Procédé selon la revendication 8 ou 9, **caractérisé en ce qu'**est fixée à la paroi intérieure du moule tubulaire (1) une bague (2) faisant saillie radialement vers l'intérieur, dont la position axiale est réglable à l'intérieur du moule (1).
